(19) Europäisches Patentamt
European Patent Office
Office européen des brevets

(11) **EP 1 481 301 B1**

(12) **EUROPEAN PATENT SPECIFICATION**

(45) Date of publication and mention of the grant of the patent:
**28.11.2007 Bulletin 2007/48**

(21) Application number: **02736493.4**

(22) Date of filing: **04.03.2002**

(51) Int Cl.:
***G05D 11/00*** (2006.01)

(86) International application number:
**PCT/US2002/006516**

(87) International publication number:
**WO 2003/079138 (25.09.2003 Gazette 2003/39)**

(54) **CLOSED-LOOP APPARATUSES FOR NON LINEAR SYSTEM IDENTIFICATION VIA OPTIMAL CONTROL**

VORRICHTUNGEN MIT REGELSCHLEIFE FÜR DIE IDENTIFIKATION NICHTLINEARER SYSTEME ÜBER OPTIMALE REGELUNG

APPAREILS EN BOUCLE FERMEE POUR IDENTIFICATION DE SYSTEMES NON LINEAIRES PAR COMMANDE OPTIMALE

(84) Designated Contracting States:
**AT BE CH CY DE DK ES FI FR GB GR IE IT LI LU MC NL PT SE TR**

(43) Date of publication of application:
**01.12.2004 Bulletin 2004/49**

(60) Divisional application:
**07010233.0**

(73) Proprietor: **THE TRUSTEES OF PRINCETON UNIVERSITY**
**Princeton, NJ 08544-0036 (US)**

(72) Inventor: **RABITZ, Herschel**
**Lawrenceville, NJ 08648 (US)**

(74) Representative: **Lawrence, John**
**Barker Brettell**
**138 Hagley Road**
**Edgbaston**
**Birmingham B16 9PW (GB)**

(56) References cited:
**CA-A1- 2 314 305        US-A- 5 569 588**
**US-A- 5 777 888        US-A- 5 840 484**
**US-A- 6 055 524**

- **PATENT ABSTRACTS OF JAPAN vol. 1998, no. 07, 31 March 1998 (1998-03-31) & JP 04 311254 A (AMERICAN TELEPH & TELEGR CO <ATT>), 4 November 1992 (1992-11-04)**
- **PATENT ABSTRACTS OF JAPAN vol. 2003, no. 12, 5 December 2003 (2003-12-05) & JP 2004 156920 A (TOSHIBA CORP; TOSHIBA DENPA SYST ENG KK), 3 June 2004 (2004-06-03)**

**Description**

**BACKGROUND OF THE INVENTION**

The present invention relates to closed-loop apparatuses for global system identification by means of optimal control that operate by evaluating the relationship between system control settings and system response. The present invention particularly relates to closed-loop apparatuses combining aspects of algorithmic inversion and optimal control for global fully nonlinear system identification. The present invention also relates to closed-loop controlled identification methods operated by the apparatuses of the present invention.

Many laboratory, industrial and environmental problems call for repeated testing and experimentation, often with the goal of identifying the underlying parameters or functions driving the device or system. These types of problems break into two categories. The first case occurs when the output of value is an identification of the system, or an image of an internal portion of the system. The second case occurs when an identification of the system model is a high value intermediate goal, providing the information for optimally enhancing the system performance or optimally interceding in its behavior to arrest a flaw or poorly functioning characteristic.

Almost without exception, the experiments and testing in realistic applications are expensive, and previous operating procedures using intuition or traditional experimental design techniques leave much to be desired. These techniques inherently are not optimal for the particular system, and all too often, the expense of testing results in little gain. The underlying difficulty frequently does not arise through a lack of variables for exploration, but rather, the plethora of them, leaving a bewildering set of studies with often vague conclusions.

Recent years have seen rapid advances in laboratory instrumentation for application to broad classes of chemical and physical phenomena. In addition, advanced inversion algorithms are becoming available with special capabilities of extracting information from data generated using this instrumentation. Last, new optimal control algorithms are available for guiding the instrumentation based directly on the information emanating from the analysis of the laboratory data.

Algorithmic inversion has played an important role in studying many systems. There has been a prevailing tolerance towards algorithmic inversion's major shortcoming - - its subservience to the available laboratory data. It is commonly recognized that data sets, either because of range, resolution, precision, experimental conditions, etc., contain varying degrees of information about the system under investigation. While a better algorithmic inversion is possible when the laboratory data contains more information about a system than when it is limited, it is rarely clear (even when observables are measured for the explicit purpose of algorithmic inversion) how to optimally perform the measurements in order to best probe the system. Without this knowledge, much less a procedure for obtaining it, algorithmic inversions have sufficed by operating with existing data, with the acknowledgment that they would likely attain a better inversion if the laboratory or field observations were performed in a different, albeit unknown, manner.

In contrast, there has been abundant experimental success with optimal control algorithms in manipulating systems to obtain intricate and diverse objectives. Closed-loop algorithms, which have been successful in the engineering disciplines for controlling numerous systems, may incorporate robust, global search algorithms where measured outcomes guide the selection of new trial controls as part of a learning process that capitalizes on an extremely high measurement repetition rate. Perhaps the best global implementations of closed-loop learning employ genetic algorithms to minimize the difference between the observed outcome and the desired target. Genetic algorithms perform global searches to simultaneously propagate a large solution family, remain convergent despite the choice of algorithmic starting conditions, and are capable of providing high yields for well-posed objectives.

There are special distinctions that arise, however, for objectives broader than immediate system control. Typically, in engineering, inversion is carried out for the specific purpose of learning a portion of a model with the ultimate goal being to improve system control from an operational perspective. Second, most common engineering applications involve maintaining operational stability, which usually is expressed in terms of a locally linear system model. See, for example, Linse et al., J. Guidance. Contrl. Dyn., 16(6), (1993); J. Seinfeld, Chem. Erig.Sci.,24, 75-83 (1969); R. Snieder et al., Inv. Prob.. 14, 387-404 (1998); A. Fradkov, Physica D, 128, 159-168 (1999); Banks et al., SIAM J. Contrl. Optim., 28 (3) 552-569 (1990); and Baumeister et al., SIAM J. Contrl,Optim., 35(2), 678-713 (1997).

For broader objectives, such as system identification, information is sought for ancillary purposes other than control. For example, in the case of molecular applications, a more general desire is to seek the Hamiltonian for other purposes besides control. In contrast to the typical circumstances in engineering such quantum mechanical applications will not be amenable to first order perturbation theory, thereby producing a nonlinear modeling and identification problem.

Biological systems are particularly complex, consisting of interacting sub-system networks of chemical reactions and molecular interactions. The objective is to influence network behavior on the molecular or physiological level to interdict a disease state or other anomalous condition, This requires an overall understanding of the network structure, gleaned from a complete picture of the underlying chemical sub-system architecture and the interactions there between, which is not possible to obtain from the crude approximations provided by the localized linear models of the prior art.

US Patent number 5 441 532 proposes an RF hyperthermia phased array applicator apparatus, which uses adaptive nulling and focussing with non-invasive electric field probes to control the electric field intensity at selected positions in and around a target body.

US Patent number 5 455 891 proposes a learning algorithm for minimizing the computational complexity of adjusting weights in a neural network.

The current practice for the overall structural identification of complex systems or networks is to operate one or more algorithms in a piece meal fashion, typically producing significant inefficiencies for nonlinear system identification. There exists a need for optimal apparatuses linking each of the foregoing technologies to overcome the shortcomings of traditional algorithmic inversion and provide a more efficient approach to system identification.

## SUMMARY OF THE INVENTION

The present invention provides closed-loop apparatuses linking laboratory instrumentation with specifically designed computer algorithms for optimal performance in the identification of complex, non-linear system network architecture. According to one aspect of the present invention, a closed-loop apparatus is provided that dynamically controls interactive networks of chemical reactions at the molecular level, as exemplified by the physiological control of biological systems. The concept has utility on a broad variety of systems, but those from biology are of prime significance. For example, the apparatus can be used to identify chemical compounds or other stimuli capable of controlling biological systems, and particularly disease states or other anomalous conditions within such systems. The apparatus operates through controlled experiments guided by learning algorithms. The response of a biological system to a set of external controls is processed by the learning algorithm, which reveals the patterns in the response data and determines the next generation of controlled experiments that better achieve the desired biological system behavior. The process is iterated to identify the best control through the least number of experiments.

Therefore, according to one aspect of the present invention, a closed-loop apparatus for identifying a model of a biological system, according to claims 1 to 7 is provided.

Preferred apparatuses according to the present invention manage a network of interactive chemical reactions or molecular interactions within a biological system to attain a desired system behaviour. The active control means operates the reaction or reactions (or molecular interaction (s)) of the biological system either in vivo or in vitro.

The present invention also includes methods by which the first apparatus of the present invention operates to control a biological system. That is, according to another aspect of the present invention, there is provided a closed-loop method for identifying a model of a biological system according to claims 8 to 12

Preferred methods according to the present invention also operate an interactive network of chemical reactions or molecular interactions within a biological system to attain a desired system behaviour. The chemical reaction or reactions (or molecular interaction(s)) of the biological system are managed either in vivo or in vitro.

An important feature of the first apparatus of the present invention is its ability to operate without any system model. However, the lack of a system model can lead to ambiguities in interpreting the control solution. Furthermore, in many applications the goal is to determine the underlying system structure. Such applications are not limited to controlling the behavior of biological systems.

Accordingly, on a broader scale beyond the dynamic control of biological systems, the present invention also provides a second apparatus for identifying system structures which may be used in combination with the first apparatus of the present invention to identify the structures of biological. System structure refers to any underlying interconnecting portions of the system, both parametric and functional, influencing system behavior.

The second apparatus of the present invention serves to reveal system structures in an efficient and cost-effective fashion. The second apparatus operates with a full family of candidate system structures, generated by an inversion algorithm consistent with experimental data. A learning algorithm is again employed to close the loop, this time by deducing additional optimal control experiments to best distinguish the system structure candidates. The apparatus will process time-series activity profiles or other types of data measured as the response to control inputs, and the data will be utilized by the inversion and learning algorithms to reveal the underlying system structures. The process will continue interactively until the optimal system structure consistent with the data is attained.

Therefore, according to another aspect of the present invention, a closed-loop apparatus is provided for identifying a system structure, within which at least one system component (e.g., a chemical reaction) produces a change in the form of a measurable system response, by determining the relationship between control settings and system response for at least one function of the system, in which the apparatus includes:

an active control means for operating at least one system component of a system through one or more control settings to produce a system response;
a measuring means for collecting system response data;
a globally searching inversion algorithm capable of inverting the system response data and providing a distribution of inverted system structures consistent therewith; and

a learning algorithm capable of analyzing the distribution of inverted system structures and determining one or more new control settings that will reduce the distribution of inverted system structures;

wherein the apparatus is adapted to interactively operate using the newest control settings until the distribution of inverted system structures cannot be further reduced.

The apparatus of the present invention thus combines a laboratory control aspect with a computational inversion aspect that communicate in a closed-loop fashion to perform an interactive interrogation of complex systems in a nonlinear fashion, providing superior information in comparison to passive inversions. While the process employed can require an extensive collection of measurements and individual inversions to be performed, in practice the measurements and inversions can be massively parallelized providing practical machinery for aggressively studying complex systems. An essential component of the apparatus is the inclusion of global search capabilities as this is necessary to provide the distribution of acceptable structures.

For example, techniques of nonlinear mapping and interpolation over the possible system structures and controls may be employed to explore all possible system structures consistent with the system response data, from which the system structure distribution most consistent therewith is identified by the globally searching inversion algorithm for use by the learning algorithm to adjust the control settings of the active control means to further improve the distribution. Therefore, according to another aspect of the present invention, the apparatus of the present invention further includes a nonlinear mapping or interpolation means capable of determining all possible system structures corresponding to the system response data for use by the global searching inversion algorithm to identify the inverted system structure distribution consistent with the system response data. Similarly, associated interpolation over the possible controls for inversion can be made, and a combined control and system structure inversion can be performed simultaneously. A preferred interpolation/mapping algorithm is a high-dimensional model representation algorithm. In addition, the apparatus may be guided to operate through judicious learning algorithm guidance of the controls, to focus in on identifying only a specific substructure of the overall system. Sequential operation of the machine could reveal further substructural components, as desired.

The measurements and inversions are performed by the apparatus of the present invention as part of a hybrid laboratory-computational process heretofore operated independently. Accordingly, the present invention thus also includes the hybrid process performed by the apparatus of the present invention.

That is, according to another aspect of the present invention, there is provided a closed-loop method for identifying a system structure, within which at least one system component (e.g., a chemical reaction) produces a change in the form of a measurable system response, by determining the relationship between control settings and system response for at least one function of the system, which method includes the steps of:

operating at least on a component of the system through one or more control settings to produce a system response;
collecting the system response data;
inverting the system response data with a globally searching inversion algorithm and determining the distribution of inverted system structures consistent therewith;
analyzing the distribution of inverted system structures with a learning algorithm and determining one or more new control settings that will reduce the distribution of inverted system structures; and
interactively repeating the steps of the method using the newest control settings, until the distribution of inverted system structures cannot be further reduced.

Operating the apparatus to reveal a full distribution of inverted structures is an essential feature of the invention. The full distribution, produced by the inversion operations, provides the control algorithm with the most complete information to make the best choice for the controls with the goal of narrowing down the distribution. The best attainable system structure arises form the narrowest possible structure distribution.

Preferred methods according to the present invention employ techniques of mapping and interpolation to explore all possible system structures consistent with the system response data, from which the globally searching inversion algorithm identifies the inverted system structure distribution therewith for analysis with the learning algorithm. Therefore, according to another aspect of the inventive method, the method of the invention further includes the step of determining all possible system structures with a nonlinear mapping or interpolating algorithm for use by the globally searching inversion algorithm to identify the distribution of inverted system structures most consistent with the system response data. A particularly preferred method employs as the interpolation/mapping algorithm a high-dimensional model representation algorithm.

The second apparatus and method of the present invention can be used in tandem with the first apparatus and method by reliably identifying the structures of the system to be controlled by the first apparatus and method, thereby obtaining better optimal control. Therefore, according to still yet another aspect of the present invention there is provided the aforementioned tandem operation of the first and second apparatuses and first and second methods of the present invention.

One of ordinary skill in the art will understand that the first and second apparatuses of the present invention, operating alone or in tandem, need not be a physical entity in a single box. Several physically distinct entities may be linked together electronically in a controlled fashion to act as a functional unit.

The present invention thus synthesizes components of non-linear algorithmic control and inversion into a functionally whole unit that operates in a closed-loop around the actual system being explored in the laboratory or field to provide the best possible knowledge of a system based on a minimal number of measurements of the physical observables. It incorporates the components of modem control, such as closed-loop learning and inversion, such as global search algorithms that extract the full system distribution consistent with the system response data, with all components functioning in sync with each other for maximum efficiency. The apparatus will take into account the quality and nature of the measurements. In this fashion the control algorithm may also dictate specific new measurements to be performed or deleted upon further excursions around the closed loop apparatus operations to optimally narrow down the system structure distribution.

Other features of the present invention will be pointed out in the following description and claims, which disclose the principles of the invention and the best modes that are presently contemplated for carrying them out.

## BRIEF DESCRIPTION OF THE DRAWINGS

A more complete appreciation of the invention and many more other intended advantages can be readily obtained by reference to the detailed description of the invention when considered in connection with the drawing figures, wherein:

FIG. 1 depicts a closed-loop control apparatus according one aspect of the present invention;
FIG. 2 depicts a closed-loop system structure identification apparatus according another aspect of the present invention;
FIG. 3 depicts the tandem operation of the apparatuses of FIGS. 1 and 2;
FIG. 4 is a flow chart depicting the method by which the apparatus of FIG. 1 operates; and
FIG. 5 is a flow chart depicting the method by which the apparatus of FIG. 2 operates.

## DETAILED DESCRIPTION OF THE PREFERRED EMBODIMENT

Closed-loop control apparatuses in accordance with the present invention serve to optimally control biological system response through externally introduced controls. The apparatuses operate cyclically, linking laboratory instrumentation with specifically designed computer algorithms that achieve optimal control and system identification by the analysis of the observed responses of the system prior to further control settings to determine the next set of control settings that better achieve the control objectives. The cycle is repeated until the best means is identified to control the biological system behavior.

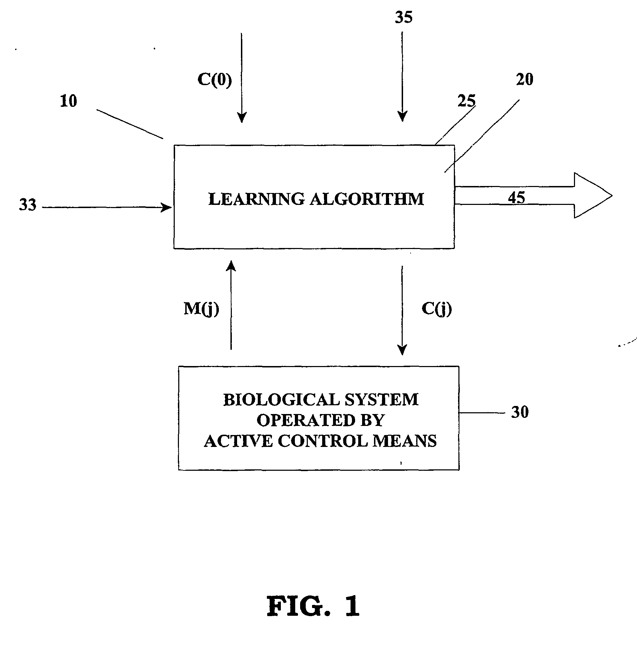

FIG. 1 is a schematic of a device 10 embodying an control apparatus according to the present invention, wherein control settings $C(j)$, $j=0, 1, \dots$ are applied through an active control means 30 by learning algorithm 20, operated by microprocessor 25, to guide experiments designed to discover the optimal means to attain a desired behavior for a biological system through observation of the system's temporal or other response $M(j)$ to the control settings through a measuring means (not shown). The learning algorithm serves to reveal the patterns in the control-response data and determine the next generation of control settings $C(j+1)$, aiming toward a biological system response closer to the desired behavior. Genetic algorithms are used for this task because they have excellent performance with complex systems and are very robust to noise in the data.

Genetic algorithms are essentially conventional to closed-loop control systems, are readily employed by those skilled in the art, and do not require detailed explanation. The primary contribution of the present invention resides not in the selection of a particular genetic algorithm, but in what the genetic algorithm is selected to do, i.e., identify patterns in biological system response data and determine one or more new control settings that will produce a biological system response closer to the desired behavior.

The desired biological system behavior 33 is input to the learning algorithm, as are laboratory constraints 35. The laboratory constraints are needed to guide the learning algorithm in the selection of the next generation of control settings in a manner consistent with the biological system conditions and the capabilities of laboratory equipment and instrumentation studying the system, thereby ensuring a more efficient and reliable choice of the control settings.

The apparatus is operated interactively using the most recent control settings until a biological system response closer to the desired behavior cannot be attained, at which point the most recent control settings reflect the best possible control settings 45 for obtaining the desired biological system behavior.

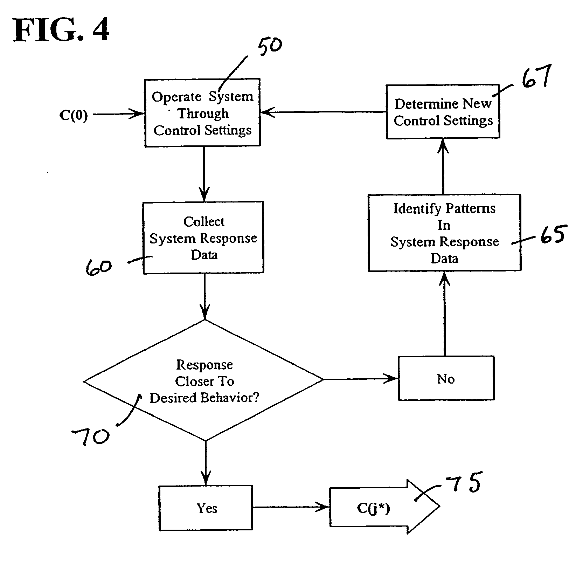

A flow chart depicting the method by which the apparatus of FIG. 1 is operated is shown in FIG. 4. The operation is initiated by the application 50 to the biological system of a trial set of controls C(0), drawn from prior experience, or even chosen randomly, and the quantitative response M(j) is recorded 60. Patterns are then identified in the biological system response 65 by the learning algorithm, which then determines the one or more new control settings 67 that will elicit a biological system response closer to the desired biological system behavior.

The trial controls, and all other controls C(j), can specifically target any component of the biological system, as long as a control is introduced eliciting a response that leads to the desired biological system behavior. For the control of bio-systems, system components for targeting include for example, genes, RNAs, proteins or other biochemicals. The controls can be drawn from a variety of sources eliciting a disruption to the system's physiological environment through many means such as pH change, the addition of specific chemical fluxes, the use of tailored laser pulses, etc., provided that there is a measurable system response. Preferably, the application of controls is quantitative. However, semi-quantitative or even qualitative controls will also reveal valuable feedback information for the selection of the next set of controls.

The recorded specific responses M(j), and the techniques by which they are measured will depend upon the objective for manipulation. For example, if the objective is more effective control of diabetes, a natural measurement will be the concentration of glucose in cultured liver cells, together with the activities of all other substances known or expected to be related with the regulation of glucose levels.

In simple cases involving only a small number of variables requiring but a few cyclical iterations traditional measurement techniques will suffice. However, in order to obtain a thorough and less-biased understanding of a system, it is preferable, and sometimes required (i.e., in the case of complex systems), that all potential determinants of the system be simultaneously measured. For the control of bio-systems, for example, large-scale, high-throughput technologies are already available for measuring mRNAs and metabolites. Protein measurement capabilities are improving rapidly as well, and the selectivity and precision of all these technologies are advancing.

The cyclic process of control and observation is interactively repeated 70, each time using the newest control settings, until a biological system response closer to the desired system behavior cannot be attained, from which the control setting leading as best as possible to the desired system behavior is determined 75. Multiple criteria may be applied to specify the optimal controls, including control simplicity and the need to balance possibly competing control objectives.

One example of a potential application for the control apparatuses and methods of the present invention is drug target identification. Complex diseases can involve the subtle interaction of various molecular determinants (e.g., genes, RNAs, proteins and other biochemicals). The control apparatuses and methods can identify the best drug targets (i.e., drug receptors) for achieving a desired bio-system behavior with a minimum number of experiments. The biomolecular components showing the most effective interaction with the controls to maximally influence the desired bio-system behavior naturally become the targets of potential drugs and other medical interdictions. The fashion of interdiction is also suggested by the quantitative pattern of response to the controls, (e.g., whether a target mRNA expression should be up-regulated or down-regulated, whether a target protein should be activated or de-activated, etc.). Moreover, the structure of many of the specific controls themselves (e.g., chemicals used to regulate specific genes, mRNAs or proteins) can give valuable hints to the initial selection of drug candidates.

While the control apparatuses and methods of the present invention have the ability to operate without any detailed bio-system model, the lack of a bio-system description could lead to ambiguities in converting the best controls identified by the learning algorithms into viable drug candidates. This can be resolved through the identification of system structures and their interconnections by means of the second apparatus and method of the present invention.

The system identification apparatuses and methods of the present invention serve to identify the architecture of systems, such as biological networks, including both the topology (i.e., which components are connected, and how) and the quantitative kinetic/dynamic parameters of the network, through optimal control in a closed-loop setting. The system identification apparatuses and methods similarly identify the structures of general nonlinear systems by the analysis of system responses to externally introduced perturbations. Computer algorithms are again employed to analyze the observed responses of the system to prior control settings to determine the next set of control settings that better achieve a solution, in this instance to the system structure. However, the system response is replaced as the feedback signal to the learning algorithm by the inversion outcome. That is, instead of performing a raw optimization on the system response data, this data is sent to the inversion component for extraction of a distribution of system structures consistent with the observed data. Once inversion is complete, the extracted distribution provides the feedback signal to the learning algorithm to make the distribution as narrow as possible. The cycle is repeated until the best solution or solutions to the system structure are identified.

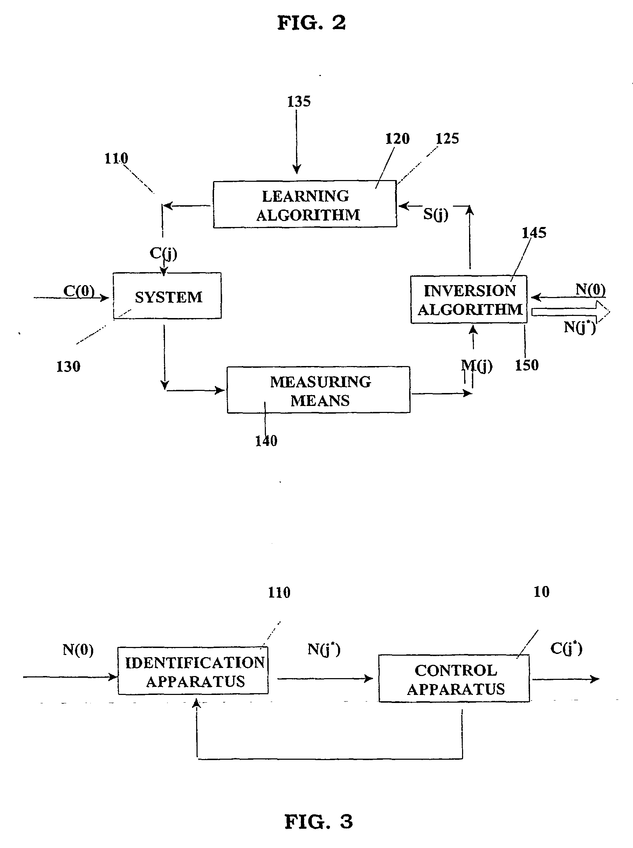

FIG. 2 is a schematic of a device 110 embodying a system identification apparatus of the present invention, not necessarily limited to biological systems. Controls C(j) are applied by learning algorithm 120, operated by microprocessor 125, to reverse engineer the structure of system 130 through observation of the system's response M(j) which may be temporal, using high-throughput measuring devices 140 and inversion of the temporal response data by globally searching inversion algorithm 145 operated by microprocessor 150. Laboratory constraints are again input to the learning algorithm to guide the next generation of controls in a manner consistent with system conditions and the capabilities of equipment and instrumentation studying the system, to ensure a more efficient and reliable choice of the controls. High through-put measuring devices suitable for use with the present invention will vary with the system under study, and will include probings of tailored electromagnetic excitations, including laser pump- probe techniques, chemical assays, electrical measurements, and other approaches especially of a high throughput nature. In the identification of bio-systems, for example, devices such as gene chips, GC-MS for investigating metabolites and other bio-molecules, DNA microarrays for measuring mRNA and DNA levels, protein microarrays for exploring protein expression levels and protein-protein interactions can be employed.

Genetic algorithms will form the core of the inversion procedure to extract a family of system architectures N (j) consistent with the response data, possibly of a temporal nature. Again, the genetic algorithms employed are essentially conventional and do not require detailed explanation. However, an essential feature of the genetic algorithm employed for inversion is to operate with a very large (e. g. 500-1000 member) population of potential system structures. The large population is needed to assure that a full distribution of inversion solutions is attained in the inversion on each loop cycle.

Genetic inversion algorithms are chosen because of their ability to simultaneously optimize the topology and the kinetic/dynamic parameters of a system. This process will be facilitated by use of special function representation techniques, such as the high-dimensional model representation methods disclosed in International Appl. Serial No.PCT/US01/00150 filed January 3,2001, published as WO 01/50124 A1. The inversion algorithms can also be combined with correlation analysis (not shown) so that different system structures N(j) can be distinguished more effectively.

The loop is closed with statistics from a distribution S(j) provided by the global searching inversion algorithm 145 of the consistent system structure solutions N(j) for analysis by learning algorithm 120. The learning algorithm serves to reveal the patterns in the structure solutions and determines the next generation of controls C (j +1) aiming toward a reduced number of structure solutions N(j) for the system. Genetic algorithms are also preferred for this task because of their excellent performance with complex systems and robustness to noise in the data and especially an ability to propagate a family of controls for seeking the best identification of the system structure. The ability of the inversion algorithm to provide for a distribution of system structures consistent with the data is essential for providing a global search to home in on the best structure(s).

Again, the genetic algorithm guiding the controls is essentially conventional and does not require detailed explanation. The primary contribution here does not reside in the selection of a particular genetic algorithms, but in what the genetic algorithm is selected to do, i.e., reveal the patterns in the controls manipulating the distribution of structure solutions and determine the next generation of controls settings that reduce the number of structure solutions for the system.

Another cycle is carried out with the new controls producing another series of time-series activity profile measurements M(j+1) or other types of data for inversion to yield a better set of candidate system structures N(j+1) with a reduced error distribution S(j+1). The process continues interactively until the controls lead as best as possible to a single system structure N(j*) left at the cycle j *, or a minimum set of structures that cannot be distinguished by further experiments of the type being considered.

While the learning control algorithm will operate with a distribution of inputs S(j) from the inversion algorithm, it is not limited to using ordinary statistical measures of the distribution (i.e., the variances). Non-traditional statistical measures of the distribution may be employed as well, such as direct integration from the mean to specified assurance limits. Furthermore, the learning algorithm can operate with other information to guide it. In particular, the inversion step can be computationally expensive, and the learning algorithm can be adapted to strike a balance between driving down the variance while also keeping the inversion "costs" (i.e., time associated with effort) down to a minimum. This can be a critical capability in many applications. It may be best to run the machine in a fashion to drive down the machine operation costs (i.e., the inversion efforts), for example, by running partial inversions during each iteration (i.e. yield substructures), while expecting that the machine will run through many iterations to reliably get at different pieces of the system during each "cheap" cycle.

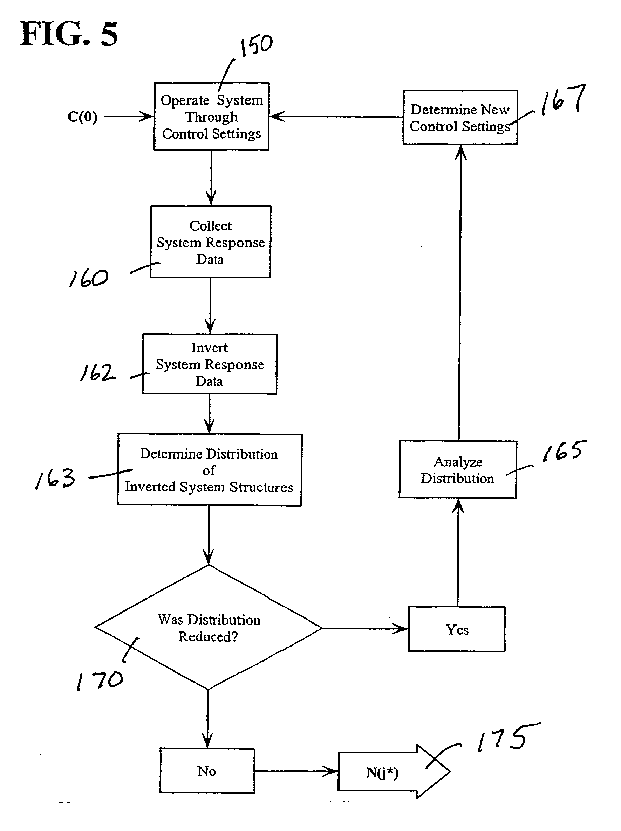

A flow chart depicting the method by which the apparatus of FIG. 2 is operated is shown in FIG. 5. The operation is initiated by application 150 to the system of a trial set of controls C(O), drawn from prior experience, or even chosen randomly. In a preferred embodiment of the present invention the trial controls C(0) are generated by introduction of a trial set of model systems N(0), also either based on existing knowledge or chosen randomly, resulting in an initial error distribution S(0), from which the learning algorithm 120 generates a set of trial controls.

The specific system responses M(j) are then recorded 160, with the system response data then inverted 162 by means of a global searching inversion algorithm, which then determines 163 the distribution of inverted system structures consistent with the system response data. The distribution of inverted system structures are then analyzed 165 by the learning algorithm, which determines 167 one or more new control settings that will reduce the distribution of inverted system structures. The process is then interactively repeated 170, each time using the newest control settings, until the distribution of inverted system structures cannot be further reduced, leading as best as possible to the desired system structure 175.

The system identification apparatuses and methods of the present invention are thus guided by the goal of enhancing the quality of resultant system structure information while performing a minimal number of experiments and testing. The operations can be carried out for highly nonlinear systems without the introduction of distorting or misleading linear approximations at any stage. The system identification apparatuses and methods have a generic structure and are generally transferrable from one application to another.

As noted above, the capabilities of the control apparatuses and methods of the present invention benefit greatly from the guidance of the actual system structures identified by the system identification apparatuses and methods of the present invention. Thus the full utility of the present invention for the improvement of system identification is realized when the control and identification apparatuses and methods are operated in tandem, as shown in FIG. 3 for the two types of apparatuses. In FIG. 3 the system identification apparatus 110 supplies information on system structure derived from N(j*) to control apparatus 10 to guide the learning algorithm of 10 in the identification of patterns in system response and the determination of the best control settings. The tandem operation may also utilize feedback 12 from the control apparatus to suggest extensions of the system structure to the system identification apparatus, which will ultimately guide the control apparatus to eventually reveal better control settings that could not be attained without the feedback, let alone without the tandem operation.

The increased capabilities from tandem operation have significant implications for drug target identification., in which the control apparatuses and methods are guided by the actual bio-system structural components revealed by the system identification apparatuses and methods to be relevant to specific diseases. System identification adds value to the effort of revealing drug targets by identifying the underlying bio-systems for active control. The active bio-system structures revealed by the apparatuses and methods of the present invention give insightful guidance on which molecular targets, either individually or in tandem, to choose for trial to further reduce the operational cost of the control apparatuses and methods in finding optimal drug targets. In a similar manner, the bio-control data from the control apparatuses and methods can be used to suggest extended bio-systems for identification. In this fashion, the synchronous operation of the two apparatuses and methods can be directed for optimal bio-functionality control purposes. The optimal drug target information resulting from the tandem operation of the two apparatuses and methods will be of high value to the biotechnology and pharmaceutical industries to more precisely indicate where to focus efforts at arresting diseases. The actual target identification would likely be performed as a separate step after identifying the bio-system structure. The best target would be revealed by an optimal control algorithm operated either with the identified system model or through additional closed loop experiments tailored to the specific goal of arresting a particular disease.

Applications for the control and system identification methods and apparatuses of the present invention include molecular structure identification, where the laboratory components of the machine use tailored electromagnetic excitations and probings, followed by closed-loop inversion of the data to yield structures, with results in turn fully linked by optimal control of the overall apparatus and algorithms. Thus the apparatus would operate to home in on structures in the most efficient manner, and ideally operating in real time. A related application would be towards identifying the fundamental forces operative at the molecular scale, where controlled laser pump-probe techniques using shaped laser pulses would be utilized in the laboratory.

Another objective concerns a hierarchy of machines for biological applications, with each envisioned to serve an ever broader function: (i) closed-loop gene and protein control with gene expression as the objective, (ii) closed-loop gene and protein control with protein expression as the objective, and (iii) closed-loop control at the gene and protein levels for the objective of biofunctional pathway identification. Other phenotypic observations at any level could be objectives as well (e.g., optimally arresting a particular disease). The practical utility of machines (i) and (ii) could be for optimal manipulation of gene and protein expression, respectively, to target phenotypic behavior, including that of arresting disease and greatly altering biological function. The final machine (iii), operating to identify biofunctional pathways , has application to revealing fundamental biochemical operating principals, as well as practical utility for optimal identification of how to interdict (e.g., likely with gene or protein manipulation) in the system with pharmaceuticals for the purpose of arresting disease.

The closed-loop bio-machines aim to draw out the maximum capabilities from the emerging technologies of gene and protein expression/manipulation through their optimal linkages and controlled operations. In the same manner, all of the applications of the invention have the common feature of being able to draw on the latest laboratory, fixed and industrial control and probe technologies with the overall architecture of the apparatuses tailored to each application.

Two broad applications for the present invention involve imaging and system identification, with the distinction lying in the use of the overall output involved. With respect to imaging applications, the concept of image refers to a multidimensional spatial and/or temporal system structure, to be extracted from any of a variety of probing experiments. The image itself is the direct output of value. Examples of imaging applications include, but are not limited to x-ray imaging in a clinical setting and for industrial materials, laser breast cancer imaging of nascent tumors, nuclear magnetic imaging of biomedical materials, acoustic imaging of flaws in high value materials (e.g., an aircraft wing structure), geological imaging for discovery of mineral deposits, military imaging applications, including radar, sonar and optical imaging, astronomical imaging over the entire range of the electromagnetic spectrum employed for observation, molecular structure determination from a variety of spectroscopic data, including microwave, infrared, visible and ultraviolet sources, and mine detection by any of a variety of acoustic or electromagnetic scattering techniques.

With respect to system identification applications, this refers to determining an underlying physical, chemical or engineering system structure both in terms if its qualitative and quantitative features associated with either a naturally operating device or one that is man-made. In a network of interconnected components, the determination of qualitative features refers to identifying which components are directly linked together. The determination of quantitative features refers to the measurement of quantitative volume of the component linkages.

Discerning the system structure is the output for subsequent use including achieving optimal system performance. High value cases of system identification include, but are not limited to, cellular and higher level bio-systems linking protein and gene activity for seeking optimal drug targets, complex industrial chemical process networks to enhance plant quality and efficiency, complex biogeochemical environmental networks for pollutant remediation, molecular force field or Hamiltonian identification for academic and industrial scientific applications, and integrated bio-systems involving multi-cellular or organ functionality for pharmaceutical and biomedical applications.

Certain aspects of the system identification method are illustrated by reference to the following application to determining network structure in molecular quantum dynamic systems. The inversion was very successful, and, most importantly, the simulations revealed that the closed cycle of the machine and its use of learning algorithms gives high quality network information despite the relatively large errors in any one set of data in the loop. The following example should not be interpreted as limiting the scope of the invention as it is defined by the claims.

**System Identification as Applied to the Extraction of Quantum Hamiltonians From Experimental Measurements of Physical Observables**

The transition dipole moments of a multi-level quantum system were extracted using simulated population transfer experiments. The inventive method for system identification was performed on a Hamiltonian of the form:

$$\mathrm{H}(t) = \mathrm{H}_0 - \mu \cdot E(t)$$

where $H_0$, the reference Hamiltonian, was assumed to be well known, but the dipole was not. The objective of the optimal inversion was to identify the best control fields, $\{E_k(t)\}$, for extracting the dipole, $\mu$, from measurements of the quantum system at a time, $t = T$, after the field had died away, *i.e., T* was large compared to the control pulse length. The dipole function, $\mu(r)$, was inverted by learning its matrix elements in the basis of the reference Hamiltonian wavefunctions, $\{\phi_i(r)\}$

$$\mu_{mn} = \langle \phi_m(\mathrm{r})|\mu(\mathrm{r})|\phi_n(\mathrm{r})\rangle.$$

Laboratory observations were simulated using a non-degenerate 10-level Hamiltonian designed to resemble the vibrational transitions of a typical molecular system. The laboratory data,

$$\Phi_{k,i}^{(lab)} = \rho_i(T;[E_k(t)])$$

was provided by the $i = 1, ..., M = 10$ populations at the target time, $t = T$, produced by the influence of the applied electromagnetic field, $E_k$. Each observed population, obtained from the system's wavefunction,

$$\Psi(r,t) = \sum_{i=1}^{N=10} a_i(t)\phi(r)$$

at $t = T$ according to,

$$\rho_i = |a_i(T)|^2$$

was calculated in the simulated experiments by propagating the initial state wavefunction, $\Psi(0)$, to $\Psi(T)$ in the presence of the electromagnetic field, $E_k(t)$, according to the time-dependent Schrödinger equation. In all cases, the initial wavefunction, $\psi(0)$ contained all the population in the ground state, $\rho(0) = [1,0,0,0,0,0,0,0,0,0]$.

To simulate a realistic laboratory experiment, each population outcome was averaged over $D = 100$ replicate observations arising from a collection of noise contaminated fields, $\left\{ E_k^j(t) \right\}$, centered around the field requested by the control optimization, $E_k(t)$. Simulated error, $\varepsilon^{(lab)}$, was introduced into the population observations to give,

$$\Phi_{k,i}^{(lab)} = \left\langle (1 + \rho_{ij})\rho_i(T; [E_k^j(t)]) \right\rangle_D$$

where $j = 1, ..., D$ and $\rho_{ij}$ was chosen randomly between $-\varepsilon_{k,j}^{(lab)}$ and $\varepsilon_{k,j}^{(lab)}$, the relative error in each population measurement. A different random value, $\rho_{ij}$, was selected every time a measurement was simulated.

Each noise contaminated control field took the form of a modulated Gaussian shaped pulse,

$$E_k^j(t) = \exp(-(t - T/2)^2 / (2s^2)) \sum_l A_l^j \cos(\omega_l t + \theta_l^j)$$

where the $\omega_1$ were the resonance frequencies of $H_0$. Here, $A_l^j$ is a control amplitude and, $\theta_l^j$, the associated control phase. Field noise was modeled as collected uncertainties in $A_l$ and $\theta_l$, which includes various types of both correlated and uncorrelated noise typically expected of laboratory pulse shaping devices. The field error was produced by introducing the parameters, $\gamma_A^j$ and $\gamma_\theta^j$ which were chosen randomly over $[-\varepsilon, +\varepsilon]$, corresponding to the relative error in the field amplitude or phase. Each individual field was constructed according to,

$$A_l^j = (1 + \gamma_A^j)A_l, \quad \theta_A^j = (1 + \gamma_\theta^j)\theta_l$$

where $A_l$ and $\theta_l$, were the amplitudes and phases requested of the control pulse shaper. A different random value (constant over the lifetime of the pulse) for $\gamma_A^j$ and $\gamma_\theta^j$ was selected each time a replicate simulation was performed.

The control variables were the Fourier amplitudes and phases used to construct the pulse, $c=\{A_l, \theta_l\}$. Each amplitude, $A_i$, was allowed to vary over $[0,1]$ V/Å, and the phases were allowed over their full dynamic range, $[0,2\pi]$ rad. In all cases, the target time, was taken to be $T= 1.5$ ps, and the pulse width was given by $s = 0.5$ ps. he control component employed a learning algorithm, for which a genetic algorithm was selected. After each pulse influenced the quantum system, a measurement was performed on the system and subsequently submitted as data for inversion. A communication architecture was employed linking the control component with the inversion component in a closed-loop design that permitted parallelization of the computationally time-consuming inversion stage. The learning control algorithm was a genetic algorithm that required the data for the entire population of inversion results at each generation, making it most efficient to parallelize the process by dispatching entire inversion optimizations to a collection of networked computers.

The control component automated the entire process by (1) instructing the pulse-shaper to produce the field and receiving the subsequent measurement data; (2) submitting the data for inversion and receiving the recovered Hamiltonian and its quality metric; (3) selecting new trial fields on the basis of their inversion quality in a closed-loop fashion and evolving a population of optimal fields; and (4) retaining a list of individual fields in the genetic algorithm population, their associated laboratory data and their corresponding inversion results for later use. At the disposal of the control component was a collection of 20 client computers available for performing inversion. When the control component received data, it queried the list of client computers to find a networked computer that was available for inverting the new set. When none were idle, the control component temporarily suspended the laboratory component, i.e., the pulse-shaper, and waited for an inversion computer to signal its availability. The client computer polling process performed by the control component was network-aware and maintained statistics about the client computers so that the fastest computers were preferentially dispatched at all times. This was in accord with the basic principles of distributed network-parallelized computing.

The inversion was performed using a steady state genetic algorithm with a population size of 200, a mutation rate of 8%, a crossover rate of 75% and a trans-generation population overlap of 50%. The quality of the extracted Hamiltonian, $Q[E_k(t)]$, was returned to the control component and used to guide the selection of future trial fields.

The objective was to maximize Q over the space of accessible fields, however, when the resulting optimal pulses were to be interpreted, it is essential to remove extraneous field structures by maximizing a control cost functional similar to,

$$\Im_c[E(t;c)] = Q[E(t;c)] - \beta \sum_{i=1}^{N} \left(\frac{c_i - c_i^{\min}}{c_i^{\max} - c_i^{\min}}\right)^2$$

where the first term favors inversion quality and the second removes extraneous field components. $\beta$ is an algorithmic parameter that balances the relative importance of inversion quality versus simplifying the field, where $\{c_i\}$ are the control field phase and amplitude variables. The value of $\beta$ must be carefully chosen, which was conveniently accomplished by adaptively ramping its value during the genetic algorithm evolution. $\beta$ should be as large as possible without compromising inversion quality. For the present demonstration, $\beta$ was chosen to be $1 \times 10^{-3}$ although the optimization was not sensitive to its value. The effective dynamic range of $\beta$ was confined by normalizing the control variables according to their laboratory range, $c_i^{\min} \leq c_i \leq c_i^{\max}$. The input to the inversion stage, including the population measurements and their corresponding fields $\theta_k^{\mathbf{lab}}$, $E_k$ was used to globally extract the family of transition dipole moment matrices consistent with the data. The global inversion of arbitrary quantum mechanical observables was accomplished by repeatedly calculating the observable for trial Hamiltonians as part of an optimization process identical in nature to the approach adopted by modem quantum control procedures. Identifying the family of dipole matrices potentials that reproduce the laboratory data for the $k^{th}$ trial field, $\theta_{\mathbf{k}}^{\mathbf{(lab)}}$, required minimizing the difference between the data and the calculated observable, $\Phi[H]$, over Hamiltonian (i.e., the dipole) space. Since any Hamiltonian that reproduces the data to within its experimental data error is equally valid, and to account for the possibly large dynamic range of the data, the inversion was performed by adopting the cost function,

$$T_{INV}[H; \Phi_k^{(lab)}] = X + K[H]$$

where *C* is a comparison functional given by,

$$C[H; \Phi_k^{(lab)}] = \frac{1}{M} \sum_{i=1}^{M} \left\{ \begin{array}{ll} O & \left| \Phi_{k,i}^{(lab)} - \Phi_{k,i}[H] \right| \leq \varepsilon_{k,i}^{(lab)} \\ \left\| \dfrac{\Phi_{k,i}^{lab)} - \Phi_{k,i}[H]}{\Phi_{k,i}^{(lab)}} \right\|, & \left| \Phi_{k,i}^{(lab)} - \Phi_{k,i}[H] \right| > \varepsilon_{k,i}^{(lab)} \end{array} \right.$$

and $\varepsilon_{k,i}^{(lab)}$ is the experimental error in the $i^{th}$ member, $\Phi_{k,i}^{(lab)} \in \Phi_k^{(lab)}$, of the data set for the $k^{th}$ control pulse $E_k(t)$. Here K[H] is a term that builds in physically based regularization with regard to the structure (e.g. smoothness) of the

Hamiltonian. $\Phi_{k,i}[H]$ is the observable's computed value for the trial Hamiltonian, $H$, under the influence of the external field, $E_k(t)$, and $M$ is the number of different measurements in the data set.

For each trial Hamiltonian during the genetic algorithm search, the calculated populations, $\Phi_k[H]$, were obtained by propagating the initial wavefunction, $\psi(0)$ to $\psi(t=T)$ in the presence of the control field, $E_k$ to obtain the final time wavefunction $\psi(T)$. No field averaging was performed during the inversion, and the control variables, $\{A_l, \theta_l\}$ were assumed to be noise-free. The influence of noise and errors was embodied in the observed data.

The inversion variables, h, were taken as the dipole matrix elements, $h_i = \mu_{mn}$. Since $\mu_{mn} = \mu_{nm}$ and $\mu_{mm} = 0$, only the upper triangular elements above the diagonal were considered making the number of inversion variables, $N_n = 45$. The inversion was performed with a steady state genetic algorithm, a population size of 200, a mutation rate of 8%, a crossover rate of 75%, and a trans-generation population overlap of 50%. The large population size was used to ensure adequate sampling of the solution family. No regularization was performed in the inversion and therefore, the second term of the cost functional, K[H], was ignored.

The uncertainty in each recovered Hamiltonian variable, $\Delta h_i^*$, was quantified using the width of its corresponding solution space,

$$\Delta h_i^* = {}^>h_i^* - {}^<h_i^*$$

as this definition fully captured the nonlinear nature of the inversion results. Here $>h_i^*$ and $<h_i^*$ are the largest and smallest members of the inversion population for the $i$-th variable to be extracted. The $\{\Delta h_i^*\}$ was used to define the inversion quality metric Q[E(t)] for the control field optimization,

$$Q[E(t)] = \frac{1}{N_\varepsilon} \sum_{i=1}^{N_\varepsilon} \mathfrak{I}_{inv}(h_i^*) + \gamma \sum_{i=1}^{N\varepsilon} \left| \Delta h_i^* \right|^2$$

where the first term measures how well the optimized Hamiltonian family reproduced the data and the second measures the inversion uncertainty. The former sum vanishes unless the data is not reproduced to within its experimental error, and the latter is weighted by an algorithmic parameter, $\gamma$, that is only relevant if the data cannot be reproduced. $\gamma$ balances the relative importance of matching the data versus minimizing uncertainty and is selected on a problem-by-problem basis.

The net output from the closed loop identification procedure was a collection of optimal pulses, their associated laboratory data, and their corresponding inversion results, $\{E_k^*(t), \Phi_k^*, h_k^*\}$. The best knowledge of the system's Hamiltonian was obtained by performing a final inversion using all of the optimal data, $\{E_k^*, \Phi_k^*\}$ simultaneously to produce a final family of doubly optimized Hamiltonians.

The inventive method was performed several times on the 10-level system to extract the transition dipole moment matrix under various conditions. Three groups of inversions were performed with various restrictions on the form of the control fields. The allowed bandwidth of the control pulse was constrained to see if the inventive method could extract a high quality Hamiltonian despite the restrictions. Bandwidth constraints were simulated as follows: in the first group of tests, only the $\upsilon \rightarrow \upsilon + 1$ transition frequencies of $H_0$ were allowed into the control pulse, in the second group, the $\upsilon \rightarrow \upsilon + 1$ and $\upsilon \rightarrow \upsilon + 2$ frequencies were included, and the third, the $\upsilon \rightarrow \upsilon + 1$, $\upsilon \rightarrow \upsilon + 2$ and $\upsilon \rightarrow \upsilon + 3$ were allowed. These three groups contained fields with a bandwidth of approximately 1200 cm$^{-1}$, 5000 cm$^{-1}$, and 9500 cm$^{-1}$, respectively.

In each of the three groups, the inversion error using data from the ten best control fields $\{E_k^*, \Phi_k^*\}$, $k = 1, \ldots$ 10, was compared to a sub-optimal inversion performed using data for 500 fields randomly chosen from the space of accessible pulse shapes. The comparison was performed to determine whether a large volume of data, here fifty-fold larger, could compensate for using sub-optimal measurements.

The results from the bandwidth restricted inversion examples are provided in Tables I-III. For each of the illustrations, the field noise in the control variables, $A_l$ and $\theta_l$, was $\pm 1\%$ and the observation error for all the populations, $\varepsilon^{(lab)}$ was also $\pm 1\%$. Table I depicts the dipole optimal inversion results for the fields restricted to $\upsilon \rightarrow \upsilon + 1$ transition frequencies. The optimal inversion results for each $h_i(\mu_{mn})$ are listed as the upper and lower limits of the optimal solution

family, $<h_i$ and $>h_i$, and the corresponding optimal inversion uncertainty, $\Delta h_i$, for the particular variable. For comparison, the inversion quality obtained by performing a standard global inversion on data for 500 sub-optimal, random fields is also provided. In all cases, the inversions were capable of reproducing the data to within its error.

Overall, the optimal inversion far outperformed the sub-optimal inversion as evidenced by the average error results seen in the last row of Table I. Here, the average optimal error of $5.6 \times 10^{-34}$ C·m was two orders of magnitude smaller than that of the sub-optimal inversion with an average error of $2.5 \times 10^{-32}$ C·m. Upon inspection of the individual inversion variables, $\mu_{mn}$, it was seen that the random fields, despite the large volume of data (500 population vectors versus 10 for the optimal inversion) only provided information about nearest neighbor transactions and allowed precise inversion of only the $\mu_{m,m+1}$ matrix elements. In direct contrast, no such pattern occurred in the optimal inversion results, and the algorithm identified fields that enabled precision inversion of all the dipole matrix elements.

A similar comparison for the inversion restricted to $\upsilon \rightarrow \upsilon+1$ and $\upsilon \rightarrow \upsilon+2$ transitions is provided in Table II. Again, optimal inversion provided substantially better knowledge of the transition dipole moments, as evidenced by comparing the average inversion errors. For the optimally obtained quantities, $\Delta h_i$, the average was $3.2 \times 10^{-34}$ C·m, while for the sub-optimal results, it was $1.9 \times 10^{-32}$ C·m. Moderate improvement was observed in both the average optimal and sub-optimal inversion by including more frequencies into the control field.

Inspecting the individual matrix elements in Table II, a pattern is readily seen. The sub-optimal inversion was only capable of precisely extracting both the nearest and second nearest neighbor matrix elements. Again, in contrast, the inventive method was able to identify fields which produced precise values for all of the matrix elements.

The trend continued for fields containing $\upsilon \rightarrow \upsilon+1$, $\upsilon \rightarrow \upsilon+2$ and $\upsilon \rightarrow \upsilon+3$ transitions, as seen in Table III. Again, both error averages in Table III displayed a modest decrease with the addition of more transition frequencies into the control pulse. Here, the sub-optimal field data permitted precise determination of the $\mu_{m,m+1}$, $\mu_{m,m+2}$ and $\mu_{m,m+3}$ transition dipole matrix elements, while the optimal inversion precisely identified all of the elements. Again, optimal inversion outperformed the sub-optimal dipole matrix determination by two orders of magnitude with average errors of $1.7 \times 10^{-34}$ and $1.4 \times 10^{-32}$ C·m, respectively.

Finally the effect of experimental uncertainty on the inversion error was investigated. The results from three optimal inversions performed with increasing error in the population measurements, $\varepsilon^{(lab)}$, are presented in Table IV. Optimal inversion was capable of handling the increase in the data error, and despite a fivefold increase in $\varepsilon^{(lab)}$ from 1% to 5%, the average inversion error only increased from $5.6 \times 10^{-34}$ to $6.7 \times 10^{-34}$ C·m. The inventive optimal identification procedure was able to identify fields for which the inversion quality were relatively insensitive to the data noise.

Inspecting the individual inversion variables in Table IV shows that some matrix elements were actually identified more precisely as the observation error increased. For example, the error reduced from $\Delta\mu_{6,7} = 1.3 \times 10^{-33}$ to $9.0 \times 10^{-34}$ to $3.0 \times 10^{-34}$ C·m as the data error increased from $\varepsilon^{(lab)} = 1\%$ to 2% to 5%. This is not a surprising finding since the primary objective of the optimal inversion algorithm in the present illustrations to achieve the smallest overall inversion error. In some cases, an individual Hamiltonian variable, $h_i$, might not be determined to the highest precision possible given the data error. This was the case for $\mu_{6,7}$ which was clearly not identified as accurately as possible for the $\varepsilon^{(lab)} = 1\%$ inversion. This behavior is a result of the definition of the inversion quality metric, which could be modified to target individual Hamiltonian variables for better scrutiny.

The foregoing demonstrated the closed loop optimally controlled system identification invention by combining the strongest features of modem control experiments and modem inversion techniques to make use of global searching, high experimental repetition rates and ultra-fast pulse shaping to actively probe the quantum Hamiltonian and identify the optimal data set for performing an inversion.

**TABLE I**: *Optimal inversion* quality versus the quality of a sub-optimal inversion of the transition dipole moments of a 10-level Hamiltonian using fields containing only $\upsilon \rightarrow \upsilon+1$ resonance frequencies of $H_0$.

| Optimal Inversion | | | Regular | | Optimal Inversion | | | Regular | |
|---|---|---|---|---|---|---|---|---|---|
| | | | | | | | | | |
| $h_i^a$ | $<h_i^*$ | $>h_i^*$ | $\Delta h_\iota^{*b}$ | $\Delta h_\iota^c$ | $h_i$ | $<h_i^*$ | $>h_i^*$ | $\Delta h_\iota^{*b}$ | $\Delta h_\iota^c$ |
| $\mu_{1,2}$ | 5.1834 | 5.1856 | 0.0022 | 0.0324 | $\mu_{3,10}$ | 0.0275 | 0.0279 | 0.0004 | 0.4129 |
| $\mu_{1,3}$ | -1.0844 | -1.0783 | 0.0061 | 0.1234 | $\mu_{4,5}$ | 9.2714 | 9.2714 | 0.0000 | 0.0004 |
| $\mu_{1,4}$ | 0.2754 | 0.2800 | 0.0045 | 0.1170 | $\mu_{4,6}$ | -3.1583 | -3.1210 | 0.0373 | 0.2781 |
| $\mu_{1,5}$ | -0.0837 | -0.0825 | 0.0011 | 0.3983 | $\mu_{4,7}$ | 1.1794 | 1.1899 | 0.0105 | 0.1555 |
| $\mu_{1,6}$ | 0.0281 | 0.0286 | 0.0004 | 0.1627 | $\mu_{4,8}$ | -0.4894 | -0.4846 | 0.0049 | 0.2394 |
| $\mu_{1,7}$ | -0.0108 | -0.0106 | 0.0002 | 0.3288 | $\mu_{4,9}$ | 0.2146 | 0.2171 | 0.0025 | 0.1252 |

(continued)

| | Optimal Inversion | | Regular | | | Optimal Inversion | | Regular | |
|---|---|---|---|---|---|---|---|---|---|
| $h_i^a$ | $<h_i^*$ | $>h_i^*$ | $\Delta h_\iota^{*b}$ | $\Delta h_\iota^c$ | $h_i$ | $<h_i^*$ | $>h_i^*$ | $\Delta h_\iota^{*b}$ | $\Delta h_\iota^c$ |
| $\mu_{1,8}$ | 0.0044 | 0.0044 | 0.0000 | 0.2221 | $\mu_{4,10}$ | -0.1031 | -0.1017 | 0.0013 | 0.3558 |
| $\mu_{1,9}$ | -0.0020 | -0.0019 | 0.0000 | 0.2008 | $\mu_{5,6}$ | 9.9388 | 9.9479 | 0.0091 | 0.0155 |
| $\mu_{1,10}$ | 0.0009 | 0.0009 | 0.0000 | 0.7341 | $\mu_{5,7}$ | -3.7370 | -3.7290 | 0.0080 | 0.1151 |
| $\mu_{2,3}$ | 7.0792 | 7.0792 | 0.0000 | 0.0201 | $\mu_{5,8}$ | 1.5226 | 1.5486 | 0.0260 | 0.3321 |
| $\mu_{2,4}$ | -1.8377 | -1.8213 | 0.0164 | 0.9830 | $\mu_{5,9}$ | -0.6823 | -0.6750 | 0.0073 | 0.3555 |
| $\mu_{2,5}$ | 0.5417 | 0.5519 | 0.0102 | 0.8430 | $\mu_{5,10}$ | 0.3222 | 0.3268 | 0.0046 | 0.1817 |
| $\mu_{2,6}$ | -0.1872 | -0.1851 | 0.0021 | 0.0878 | $\mu_{6,7}$ | 10.4084 | 10.4211 | 0.0127 | 0.0058 |
| $\mu_{2,7}$ | 0.0692 | 0.0701 | 0.0009 | 0.0922 | $\mu_{6,8}$ | -4.2744 | -4.2726 | 0.0018 | 0.1152 |
| $\mu_{2,8}$ | -0.0288 | -0.0284 | 0.0005 | 0.3150 | $\mu_{6,9}$ | 1.8916 | 1.8985 | 0.0070 | 0.9735 |
| $\mu_{2,9}$ | 0.0126 | 0.0128 | 0.0002 | 0.1441 | $\mu_{6,10}$ | -0.9087 | -0.8922 | 0.0165 | 0.4670 |
| $\mu_{2,10}$ | -0.0061 | -0.0060 | 0.0001 | 0.2221 | $\mu_{7,8}$ | 10.7185 | 10.7185 | 0.0000 | 0.0235 |
| $\mu_{3,4}$ | 8.3500 | 8.3533 | 0.0033 | 0.0332 | $\mu_{7,9}$ | -4.7555 | -4.7444 | 0.0111 | 0.2535 |
| $\mu_{3,5}$ | -2.5145 | -2.5095 | 0.0060 | 0.3883 | $\mu_{7,10}$ | 2.2548 | 2.2743 | 0.0195 | 0.0986 |
| $\mu_{3,6}$ | 0.8432 | 0.8550 | 0.0118 | 0.2551 | $\mu_{8,9}$ | 10.8821 | 10.8972 | 0.0151 | 0.0190 |
| $\mu_{3,7}$ | -0.3223 | -0.3176 | 0.0047 | 0.0999 | $\mu_{8,10}$ | -5.1798 | -5.1755 | 0.0043 | 0.3133 |
| $\mu_{3,8}$ | 0.1313 | 0.1324 | 0.0011 | 0.4515 | $\mu_{9,10}$ | 10.9182 | 10.9182 | 0.0000 | 0.0144 |
| $\mu_{3,9}$ | -0.0587 | -0.0577 | 0.0010 | 0.2818 | **Average Error** | | | 0.0056 | 0.2537 |

a All values are in units of 1x10$^{-31}$ C·m
b Obtained by inverting data for 10 optimal fields
c Obtained by inverting sub-optimal data for 500 random fields

**TABLE II:** *Optimal inversion* quality versus the quality of a sub-optimal inversion of the transition dipole moments of a 10-level Hamiltonian using fields containing only $\upsilon\rightarrow\upsilon+1$ and $\upsilon\rightarrow\upsilon+2$ resonance frequencies of $H_0$.

| | Optimal Inversion | | Regular | | | Optimal Inversion | | Regular | |
|---|---|---|---|---|---|---|---|---|---|
| $h_i^a$ | $<h_i^*$ | $>h_i^*$ | $\Delta h_i^{*b}$ | $\Delta h_i^c$ | $h_i$ | $<h_i^*$ | $>h_i^*$ | $\Delta h_i^{*b}$ | $\Delta h_i^c$ |
| $\mu_{1,2}$ | 5.18550 | 5.1855 | 0.0005 | 0.0324 | $\mu_{3,10}$ | 0.0275 | 0.0279 | 0.0004 | 0.4029 |
| $\mu_{1,3}$ | -1.0844 | -1.0783 | 0.0061 | 0.0211 | $\mu_{4,5}$ | 9.2714 | 9.2714 | 0.0000 | 0.0004 |
| $\mu_{1,4}$ | 0.2754 | 0.2800 | 0.0045 | 0.1134 | $\mu_{4,6}$ | -3.1479 | -3.1466 | 0.0011 | 0.0085 |
| $\mu_{1,5}$ | -0.0837 | -0.0825 | 0.0011 | 0.3251 | $\mu_{4,7}$ | 1.1801 | 1.1899 | 0.0098 | 0.1555 |
| $\mu_{1,6}$ | 0.0281 | 0.0286 | 0.0004 | 0.1627 | $\mu_{4,8}$ | -0.4894 | -0.4846 | 0.0049 | 0.2411 |
| $\mu_{1,7}$ | -0.0108 | -0.0106 | 0.0002 | 0.3712 | $\mu_{4,9}$ | 0.2146 | 0.2171 | 0.0025 | 0.0999 |
| $\mu_{1,8}$ | 0.0044 | 0.0044 | 0.0000 | 0.2001 | $\mu_{4,10}$ | -0.1031 | -0.1017 | 0.0013 | 0.3158 |
| $\mu_{1,9}$ | -0.0020 | -0.0019 | 0.0000 | 0.2008 | $\mu_{5,6}$ | 9.9388 | 9.9479 | 0.0091 | 0.0155 |
| $\mu_{1,10}$ | 0.0009 | 0.0009 | 0.0000 | 0.7187 | $\mu_{5,7}$ | -3.7370 | -3.7290 | 0.0080 | 0.0352 |
| $\mu_{2,3}$ | 7.0792 | 7.0792 | 0.0000 | 0.0201 | $\mu_{5,8}$ | 1.5326 | 1.5339 | 0.0013 | 0.3021 |
| $\mu_{2,4}$ | -1.8250 | -1.8213 | 0.0037 | 0.0337 | $\mu_{5,9}$ | -0.6823 | -0.6750 | 0.0073 | 0.3155 |

(continued)

| | Optimal Inversion | | Regular | | | Optimal Inversion | | Regular | |
|---|---|---|---|---|---|---|---|---|---|
| $h_i^a$ | $<h_i^*$ | $>h_i^*$ | $\Delta h_i^{*b}$ | $\Delta h_i^c$ | $h_i$ | $<h_i^*$ | $>h_i^*$ | $\Delta h_i^{*b}$ | $\Delta h_i^c$ |
| $\mu_{2,5}$ | 0.5470 | 0.5480 | 0.0010 | 0.8111 | $\mu_{5,10}$ | 0.3222 | 0.3268 | 0.0046 | 0.1817 |
| $\mu_{2,6}$ | -0.1872 | -0.1851 | 0.0021 | 0.0878 | $\mu_{6,7}$ | 10.4084 | 10.4211 | 0.0127 | 0.0058 |
| $\mu_{2,7}$ | 0.0692 | 0.0701 | 0.0009 | 0.0922 | $\mu_{6,8}$ | -4.2744 | -4.2726 | 0.0018 | 0.0009 |
| $\mu_{2,8}$ | -0.0288 | -0.0284 | 0.0005 | 0.3049 | $\mu_{6,9}$ | 1.8916 | 1.8985 | 0.0070 | 0.9635 |
| $\mu_{2,9}$ | 0.0126 | 0.0128 | 0.0002 | 0.1441 | $\mu_{6,10}$ | -0.9087 | -0.8922 | 0.0165 | 0.4370 |
| $\mu_{2,10}$ | -0.0061 | -0.0060 | 0.0001 | 0.2081 | $\mu_{7,8}$ | 10.7185 | 10.7185 | 0.0000 | 0.0235 |
| $\mu_{3,4}$ | 8.3500 | 8.3533 | 0.0033 | 0.0332 | $\mu_{7,9}$ | -4.7555 | -4.7530 | 0.0025 | 0.0087 |
| $\mu_{3,5}$ | -2.5145 | -2.5095 | 0.0060 | 0.0383 | $\mu_{7,10}$ | 2.2611 | 2.2661 | 0.0050 | 0.0986 |
| $\mu_{3,6}$ | 0.8500 | 0.8519 | 0.0019 | 0.2342 | $\mu_{8,9}$ | 10.8851 | 10.8900 | 0.0059 | 0.0190 |
| $\mu_{3,7}$ | -0.3223 | -0.3176 | 0.0047 | 0.0999 | $\mu_{8,10}$ | -5.1798 | -5.1755 | 0.0043 | 0.0118 |
| $\mu_{3,8}$ | 0.1313 | 0.1324 | 0.0011 | 0.3911 | $\mu_{9,10}$ | 10.9182 | 10.9182 | 0.0000 | 0.0144 |
| $\mu_{3,9}$ | -0.0587 | -0.0577 | 0.0010 | 0.2818 | **Average Error** | | | 0.0032 | 0.1927 |

[a]All values are in units of $1 \times 10^{-31}$ C·m
[b]Obtained by inverting data for 10 optimal fields
[c]Obtained by inverting sub-optimal data for 500 random fields

**TABLE III**: *Optimal inversion* quality versus the quality of a sub-optimal inversion of the transition dipole moments of a 10-level Hamiltonian using fields containing only $\upsilon \to \upsilon+1$, $\upsilon \to \upsilon+2$ and $\upsilon \to \upsilon+3$ resonance frequencies of $H_0$.

| | Optimal Inversion | | Regular | | | Optimal Inversion | | Regular | |
|---|---|---|---|---|---|---|---|---|---|
| $h_i^a$ | $>h_i^*$ | $>h_i^*$ | $\Delta h_i^{*b}$ | $\triangle h_i^c$ | $h_i$ | $h_i^*$ | $>h_i^*$ | $\Delta h_\iota^{*b}$ | $\Delta h_i^c$ |
| $\mu_{1,2}$ | 5.1855 | 5.1855 | 0.0000 | 0.0207 | $\mu_{3,10}$ | 0.0272 | 0.0272 | 0.0000 | 0.4029 |
| $\mu_{1,3}$ | -1.0793 | -1.0793 | 0.0000 | 0.0207 | $\mu_{4,5}$ | 9.2714 | 9.2714 | 0.0000 | 0.0004 |
| $\mu_{1,4}$ | 0.2754 | 0.2800 | 0.0045 | 0.0194 | $\mu_{4,6}$ | -3.1474 | -3.1474 | 0.0000 | 0.0085 |
| $\mu_{1,5}$ | -0.0837 | -0.0825 | 0.0011 | 0.3251 | $\mu_{4,7}$ | 1.1856 | 1.1850 | 0.0005 | 0.0055 |
| $\mu_{1,6}$ | 0.0281 | 0.0286 | 0.0004 | 0.1627 | $\mu_{4,8}$ | -0.4855 | -0.4846 | 0.0009 | 0.1911 |
| $\mu_{1,7}$ | -0.0106 | -0.0106 | 0.0000 | 0.3712 | $\mu_{4,9}$ | 0.2146 | 0.2171 | 0.0025 | 0.0999 |
| $\mu_{1,8}$ | 0.0044 | 0.0044 | 0.0000 | 0.2001 | $\mu_{4,10}$ | -0.1031 | -0.1017 | 0.0013 | 0.2772 |
| $\mu_{1,9}$ | -0.0020 | -0.0019 | 0.0000 | 0.2008 | $\mu_{5,6}$ | 9.9388 | 9.9490 | 0.0002 | 0.0155 |
| $\mu_{1,10}$ | 0.0009 | 0.0009 | 0.0000 | 0.7187 | $\mu_{5,7}$ | -3.7370 | -3.7290 | 0.0080 | 0.0352 |
| $\mu_{2,3}$ | 7.0792 | 7.0792 | 0.0000 | 0.0201 | $\mu_{5,8}$ | 1.5332 | 1.5334 | 0.0002 | 0.1926 |
| $\mu_{2,4}$ | -1.8250 | -1.8213 | 0.0037 | 0.0337 | $\mu_{5,9}$ | -0.6823 | -0.6750 | 0.0073 | 0.1952 |
| $\mu_{2,5}$ | 0.5470 | 0.5480 | 0.0010 | 0.0111 | $\mu_{5,10}$ | 0.3222 | 0.3268 | 0.0046 | 0.1817 |
| $\mu_{2,6}$ | -0.1872 | -0.1851 | 0.0021 | 0.0878 | $\mu_{6,7}$ | 10.4100 | 10.4120 | 0.0020 | 0.0058 |

**15**

(continued)

| Optimal Inversion | | | Regular | | Optimal Inversion | | | Regular | |
|---|---|---|---|---|---|---|---|---|---|
| $h_i{}^a$ | $>h_i{}^*$ | $>h_i{}^*$ | $\Delta h_i{}^{*b}$ | $\triangle h_i{}^c$ | $h_i$ | $h_i{}^*$ | $>h_i{}^*$ | $\Delta h_t{}^{*b}$ | $\triangle h_i{}^c$ |
| $\mu_{2,7}$ | 0.0692 | 0.0701 | 0.0009 | 0.0922 | $\mu_{6,8}$ | -4.2744 | -4.2726 | 0.0018 | 0.0009 |
| $\mu_{2,8}$ | -0.0286 | -0.0286 | 0.0000 | 0.2143 | $\mu_{6,9}$ | 1.8916 | 1.8985 | 0.0070 | 0.7825 |
| $\mu_{2,9}$ | 0.0128 | 0.0128 | 0.0000 | 0.1333 | $\mu_{6,10}$ | -0.9087 | -0.9005 | 0.0082 | 0.3629 |
| $\mu_{2,10}$ | -0.0061 | -0.0061 | 0.0000 | 0.1923 | $\mu_{7,8}$ | 10.7185 | 10.7185 | 0.0000 | 0.0103 |
| $\mu_{3,4}$ | 8.3500 | 8.3533 | 0.0033 | 0.0332 | $\mu_{7,9}$ | -4.7555 | -4.7530 | 0.0025 | 0.0083 |
| $\mu_{3,5}$ | -2.5099 | -2.5095 | 0.0004 | 0.0383 | $\mu_{7,10}$ | 2.2611 | 2.2661 | 0.0050 | 0.0221 |
| $\mu_{3,6}$ | 0.8500 | 0.8519 | 0.0019 | 0.0249 | $\mu_{8,9}$ | 10.8851 | 10.8900 | 0.0059 | 0.0099 |
| $\mu_{3,7}$ | -0.3202 | -0.3200 | 0.0002 | 0.0893 | $\mu_{8,10}$ | -5.1763 | -5.1764 | 0.0001 | 0.0182 |
| $\mu_{3,8}$ | 0.1313 | 0.1324 | 0.0011 | 0.1611 | $\mu_{9,10}$ | 10.9182 | 10.9182 | 0.0000 | 0.0044 |
| $\mu_{3,9}$ | -0.0587 | -0.0577 | 0.0010 | 0.2818 | **Average Error** | | | 0.0017 | 0.1358 |

[a]All values are in units of $1 \times 10^{-31}$ C·m
[b]Obtained by inverting data for 10 optimal fields
[c]Obtained by inverting sub-optimal data for 500 random fields

**TABLE IV**: *Optimal inversion* quality, measured as the uncertainty in each optimally inverted variable, $\Delta h^*_i$, verses the experimental error in the data, $\varepsilon^{(lab)}$

| $\Delta h_i{}^*$ verses $\varepsilon^{(lab)}$ | | | | $\Delta h_i{}^*$ verses $\varepsilon^{(lab)}$ | | | |
|---|---|---|---|---|---|---|---|
| $h_i{}^a$ | 1% | 2% | 5% | $h_i{}^a$ | 1% | 2% | 5% |
| $\mu_{1,2}$ | 0.0022 | 0.0020 | $0.0020_{3,10}$ $\mu_{3,10}$ | | 0.0004 | 0.0018 | 0.0031 |
| $\mu_{1,3}$ | 0.0061 | 0.0091 | 0.0093 | $\mu_{4,5}$ | 0.0000 | 0.0030 | 0.0025 |
| $\mu_{1,4}$ | 0.0045 | 0.0063 | 0.0061 | $\mu_{4,6}$ | 0.0373 | 0.0020 | 0.0031 |
| $\mu_{1,5}$ | 0.0011 | 0.0051 | 0.0058 | $\mu_{4,7}$ | 0.0105 | 0.0030 | 0.0083 |
| $\mu_{1,6}$ | 0.0004 | 0.0099 | 0.0099 | $\mu_{4,8}$ | 0.0049 | 0.0053 | 0.0057 |
| $\mu_{1,7}$ | 0.0002 | 0.0044 | 0.0071 | $\mu_{4,9}$ | 0.0025 | 0.0119 | 0.0201 |
| $\mu_{1,8}$ | 0.0000 | 0.0001 | 0.0001 | $\mu_{4,10}$ | 0.0013 | 0.0015 | 0.0018 |
| $\mu_{1,9}$ | 0.0000 | 0.0003 | 0.0007 | $\mu_{5,6}$ | 0.0091 | 0.0007 | 0.0011 |
| $\mu_{1,10}$ | 0.0000 | 0.0002 | 0.0008 | $\mu_{5,7}$ | 0.0080 | 0.0011 | 0.0132 |
| $\mu_{2,3}$ | 0.0000 | 0.0004 | 0.0005 | $\mu_{5,8}$ | 0.0260 | 0.0052 | 0.0055 |
| $\mu_{2,4}$ | 0.0164 | 0.0235 | 0.0235 | $\mu_{5,9}$ | 0.0073 | 0.0158 | 0.0110 |
| $\mu_{2,5}$ | 0.0102 | 0.0332 | 0.0042 | $\mu_{5,10}$ | 0.0046 | 0.0000 | 0.0003 |
| $\mu_{2,6}$ | 0.0009 | 0.0003 | 0.0006 | $\mu_{6,7}$ | 0.0127 | 0.0090 | 0.0030 |
| $\mu_{2,7}$ | 0.0005 | 0.0003 | 0.0007 | $\mu_{6,8}$ | 0.0018 | 0.0190 | 0.0099 |
| $\mu_{2,8}$ | 0.0002 | 0.0003 | 0.0006 | $\mu_{6,9}$ | 0.0070 | 0.0118 | 0.0311 |
| $\mu_{2,9}$ | 0.0001 | 0.0026 | 0.0028 | $\mu_{6,10}$ | 0.0165 | 0.0092 | 0.0099 |

(continued)

| | $\Delta h_i^*$ verses $\varepsilon^{(lab)}$ | | | | $\Delta h_i^*$ verses $\varepsilon^{(lab)}$ | | |
|---|---|---|---|---|---|---|---|
| $h_i{}^a$ | 1% | 2% | 5% | $h_i{}^a$ | 1% | 2% | 5% |
| $\mu_{2,10}$ | 0.0033 | 0.0029 | 0.0029 | $\mu_{7,8}$ | 0.0000 | 0.0119 | 0.0187 |
| $\mu_{3,4}$ | 0.0060 | 0.0002 | 0.0005 | $\mu_{7,9}$ | 0.0111 | 0.0020 | 0.0023 |
| $\mu_{3,5}$ | 0.0118 | 0.0006 | 0.0005 | $\mu_{7,10}$ | 0.0195 | 0.0201 | 0.0325 |
| $\mu_{3,6}$ | 0.0047 | 0.0010 | 0.0041 | $\mu_{8,9}$ | 0.0151 | 0.0006 | 0.0011 |
| $\mu_{3,7}$ | 0.0011 | 0.0073 | 0.0074 | $\mu_{8,10}$ | 0.0043 | 0.0008 | 0.0010 |
| $\mu_{3,8}$ | 0.0010 | 0.0020 | 0.0018 | $\mu_{9,10}$ | 0.0000 | 0.0182 | 0.0192 |
| $\mu_{3,9}$ | 0.0049 | 0.0049 | 0.0058 | **Average** | 0.0056 | 0.0060 | 0.0067 |
| $^a$All values are in units of 1x10$^{-31}$ C·m | | | | | | | |

**Claims**

1. A closed-loop apparatus for identifying a model of a biological system (30, 130), comprising:

   an active control means for applying one or more control settings (C(j)) to said biological system to produce a system response;
   a measuring means (140) for collecting system response data (M(j));
   a global searching inversion algorithm (145) utilising the system response data (M(j)) to provide a statistical distribution (S(j)) of candidate system structures (N(j)) which are consistent with the system response data ; and
   a learning algorithm (20, 120) capable of analyzing the statistical distribution (S(j)) of candidate system structures to reveal patterns in the control settings (c(j)) and response data as associated with the statistical distribution of candidate system structures and utilizing pattern recognition to determine one or more new control settings (c(j+1)) that will generate new response data thereby to reduce the statistical distribution of candidate system structures;

   wherein the apparatus is adapted to operate iteratively, using the newest control settings (C(j + 1)) in each iteration to produce new measured data (M(j+1)) for use by the inversion algorithm (145) to reduce the statistical distribution of candidate system structures.

2. The apparatus of claim 1, wherein said learning algorithm (20, 120) is a genetic algorithm.

3. The apparatus of claim 1, wherein said apparatus is adapted:

   to supply information on biological system structure to said learning algorithm (20, 120).

4. The apparatus of claim 3, wherein said apparatus is adapted to provide feedback to said learning algorithm related to extensions of the biological system structure obtained from said patterns in said biological system response data.

5. The apparatus of claim 1, wherein said inversion algorithm (145) is a genetic algorithm.

6. The apparatus of claim 1, wherein said apparatus manages a network of interactive chemical reactions or molecular interactions within a biological system to attain a desired system behaviour.

7. The apparatus of claim 1, further comprising nonlinear mapping or interpolation means capable of determining candidate system structures corresponding to the system response data for use by the global searching inversion algorithm to identify the candidate system structure distribution consistent with the system response data.

8. A closed-loop method for identifying a model of a biological system (30, 130), comprising the steps of:

   applying one or more control settings (C(j)) to the biological system to produce a system response;

collecting the system response data (M(j));

utilising the system response data in a global searching inversion algorithm (145) to determine a statistical distribution (S(j)) of candidate biological system structures (N(j)) which are consistent with the system response data ;

analyzing the statistical distribution of candidate biological system structures with a learning algorithm (20, 120) to reveal patterns in the control settings (c(j)) and response data as associated with the statistical distribution of system structures and utilizing pattern recognition to determine one or more new control settings (c(j+1)) that will generate new response data to reduce the statistical distribution of candidate biological system structures; and

repeating the steps of the method iteratively using the newest control settings (C(j+1)) at each iteration, to reduce the statistical distribution of candidate biological system structures.

9. The method of claim 8, wherein said learning algorithm is a genetic algorithm.

10. The method of claim 8, wherein said method further includes the steps of:

(A) identifying the structure of said biological system to be controlled by determining the relationship between control settings and biological system response for at least one function of said biological system; and
(B) supplying information on biological system structure to said learning algorithm (20, 120).

11. The method of claim 10, further comprising the step of:

(C) providing feedback from to said learning algorithm related to extensions of the biological system structure obtained from said patterns in said system response data.

12. The method of claim 8, further comprising determining candidate system structures with a nonlinear mapping or interpolating algorithm for use by the globally searching inversion algorithm to identify the distribution candidate system structures most consistent with the system response data.

**Patentansprüche**

1. Eine Vorrichtung mit Regelschleife zum Identifizieren eines Modells eines biologischen Systems (30, 130), enthaltend:

ein aktives Steuerungsmittel zum Anwenden von einer oder mehreren. Steuerungseinstellung(en) (C(j)) bei dem biologischen System, um eine Systemantwort zu erzeugen;

ein Messmittel (140) zum Sammeln von Systemantwortdaten (M(j));

einen global suchenden Inversionsalgorithmus (145), der die Systemantwortdaten (M(j)) verwendet, um eine statistische Verteilung (S(j)) von in Frage kommenden Systemstrukturen (N(j)) zur Verfügung zu stellen, die zu den Systemantwortdaten konsistent sind; und

einen lernenden Algorithmus (20, 120), der die statistische Verteilung (S(j)) von in Frage kommenden Systemstrukturen zu analysieren vermag, um Strukturen in den Steuerungseinstellungen (C(j)) und Antwortdaten aufzudecken, die mit der statistischen Verteilung von in Frage kommenden Systemstrukturen assoziiert sind, und Strukturerkennung zu verwenden vermag, um eine oder mehrere neue Steuerungseinstellung(en) (C(j+1)) zu ermitteln, die neue Antwortdaten erzeugen wird/werden, um die statistische Verteilung von in Frage kommenden Systemstrukturen zu verringern;

wobei die Vorrichtung so eingerichtet ist, dass sie iterativ tätig ist, unter Verwenden der neuesten Steuerungseinstellungen (C(j+1)) bei jeder Iteration, um neue gemessene Daten (M(j+1)) zur Verwendung durch den Inversionsalgorithmus (145) zu erzeugen, um die statistische Verteilung von in Frage kommenden Systemstrukturen zu verringern.

2. Die Vorrichtung nach Anspruch 1, wobei der lernende Algorithmus (20, 120) ein genetischer Algorithmus ist.

3. Die Vorrichtung nach Anspruch 1, wobei die Vorrichtung eingerichtet ist:

um Information über biologische Systemstruktur dem lernenden Algorithmus (20, 120) zuzuführen.

**4.** Die Vorrichtung nach Anspruch 3, wobei die Vorrichtung eingerichtet ist, um dem lernenden Algorithmus Rückmeldung bezüglich Erweiterungen der biologischen Systemstruktur zur Verfügung zu stellen, die aus den Strukturen in den biologischen Systemantwortdaten erhalten werden.

**5.** Die Vorrichtung nach Anspruch 1, wobei der Inversionsalgorithmus (145) ein genetischer Algorithmus ist.

**6.** Die Vorrichtung nach Anspruch 1, wobei die Vorrichtung ein Netzwerk an interaktiven chemischen Reaktionen oder molekularen Interaktionen innerhalb eines biologischen Systems handhabt, um ein erwünschtes Systemverhalten zu erzielen.

**7.** Die Vorrichtung nach Anspruch 1, die weiter ein nichtlineares Mapping- oder Interpolationsmittel enthält, das in Frage kommende Systemstrukturen entsprechend zu den Systemantwortdaten zur Verwendung durch den global suchenden Inversionsalgorithmus zu ermitteln vermag, um die Verteilung der in Frage kommenden Systemstruktur, die mit den Systemantwortdaten konsistent ist, zu identifizieren.

**8.** Ein Verfahren mit Regelschleife zum Identifizieren eines Modells eines biologischen Systems (30, 130), das die Schritte umfasst:

Anwenden von einer oder mehreren Steuerungseinstellung(en) (C(j)) bei dem biologischen System, um eine Systemantwort zu erzeugen;
Sammeln der Systemantwortdaten (M(j));
Verwenden der Systemantwortdaten in einem global suchenden Inversionsalgorithmus (145), um eine statistische Verteilung (S(j)) von in Frage kommenden biologischen Systemstrukturen (N(j)) zu bestimmen, die mit den Systemantwortdaten konsistent sind;
Analysieren der statistischen Verteilung von in Frage kommenden biologischen Systemstrukturen mit einem lernenden Algorithmus (20, 120), um Strukturen in den Steuerungseinstellungen (C(j)) und Antwortdaten aufzudecken, die mit der statistischen Verteilung von Systemstrukturen assoziiert sind, und Verwenden von Strukturerkennung, um eine oder mehrere neue Steuerungseinstellung(en) (C(j+1)) zu ermitteln, die neue Antwortdaten erzeugen wird/werden, um die statistische Verteilung von in Frage kommenden biologischen Systemstrukturen zu verringern; und
Iteratives Wiederholen der Verfahrensschritte unter Verwenden der neuesten Steuerungseinstellungen (C(j+1)) bei jeder Iteration, um die statistische Verteilung von in Frage kommenden biologischen Systemstrukturen zu verringern.

**9.** Das Verfahren nach Anspruch 8, wobei der lernende Algorithmus ein genetischer Algorithmus ist.

**10.** Das Verfahren nach Anspruch 8, wobei das Verfahren weiter die Schritte umfasst:

(A) Identifizieren der Struktur des biologischen Systems, das durch Ermitteln der Beziehung zwischen Steuerungseinstellungen und biologischer Systemantwort bezüglich wenigstens einer Funktion des biologischen Systems gesteuert werden soll; und
(B) Zuführen von Information über biologische Systemstruktur zu dem lernenden Algorithmus (20, 120).

**11.** Das Verfahren nach Anspruch 10, weiter den Schritt umfassend:

(C) Dem lernenden Algorithmus Rückmeldung bezüglich Erweiterungen der biologischen Systemstruktur zur Verfügung stellen, die aus den Strukturen in den Systemantwortdaten erhalten werden.

**12.** Das Verfahren nach Anspruch 8, weiter umfassend Ermitteln von in Frage kommenden Systemstrukturen mit einem nichtlinearen Mapping- oder Interpolationsalgrithmus zum Verwenden durch den global suchenden Inversionsalgorithmus, um die Verteilung von in Frage kommenden Systemstrukturen zu identifizieren, die mit den Systemantwortdaten am meisten konsistent sind.

**Revendications**

**1.** Appareil en boucle fermée destiné à identifier un modèle d'un système biologique (30, 130) comprenant :

un moyen de commande actif pour appliquer une ou plusieurs consignes (C(j)) audit système biologique afin de générer une réponse du système ;

un moyen de mesure (140) pour collecter des données de réponse du système (M(j)) ;

un algorithme d'inversion à recherche globale (145) utilisant les données de réponse du système (M(j)) pour fournir une distribution statistique (S(j)) de structures candidates du système (N(j)) qui sont cohérentes avec les données de réponse du système ; et

un algorithme d'apprentissage (20, 120) capable d'analyser la distribution statistique (S(j)) de structures candidates du système pour révéler des motifs dans les consignes (C(j)) et les données de réponse telles qu'associées à la distribution statistique de structures candidates du système et utilisant une reconnaissance de motif pour déterminer une ou plusieurs nouvelles consignes (C(j+1)) qui généreront de nouvelles données de réponse pour réduire ainsi la distribution statistique de structures candidates du système ;

l'appareil étant adapté pour fonctionner par itération, en utilisant les consignes les plus récentes (C(j+1)) à chaque itération pour générer de nouvelles données mesurées (M(j+1)) pour utilisation par l'algorithme d'inversion (145), afin de réduire la distribution statistique de structures candidates du système.

2. Appareil selon la revendication 1, dans- lequel ledit algorithme d'apprentissage (20, 120) est un algorithme génétique.

3. Appareil selon la revendication 1, l'appareil étant adapté pour fournir des informations sur la structure du système biologique audit algorithme d'apprentissage (20, 120).

4. Appareil selon la revendication 3, ledit appareil étant adapté pour fournir audit algorithme d'apprentissage des informations de retour liées à des extensions de la structure du système biologique obtenues à partir desdits motifs dans lesdites données de réponse du système biologique.

5. Appareil selon La revendication 1, dans lequel ledit algorithme d'inversion (145) est un algorithme génétique.

6. Appareil selon la revendication 1, ledit appareil gérant un réseau de réactions chimiques interactives ou d'interactions moléculaires à l'intérieur d'un système biologique pour obtenir un comportement souhaité du système.

7. Appareil selon la revendication 1, comprenant en outre un moyen de cartographie ou d'interpolation non linéaire capable de déterminer des structures candidates du système correspondant aux données de réponse du système pour utilisation par l'algorithme d'inversion à recherche globale afin d'identifier une distribution de structures candidates du système cohérentes avec les données de réponse du système.

8. Procédé en boucle fermée destiné à identifier un modelé d'un système biologique (30, 130), comprenant les étapes de:

application d'une ou plusieurs consignes (C(j)) au système biologique pour générer une réponse du système ;

collecte des données de réponse du système (M(j));

utilisation des données de réponse du système dans un algorithme d'inversion à recherche globale (145) pour déterminer une distribution statistique (S(j)) de structures candidates du système biologique (N(j)) qui sont cohérentes avec les données de réponse du système ;

analyse de la distribution statistique de structures candidates du système biologique avec un algorithme d'apprentissage (20, 120) pour révéler des motifs dans les consignes (C(j)) et les données de réponse telles qu'associés à la distribution statistique de structures du système et utilisant une reconnaissance de motif pour déterminer une ou plusieurs nouvelles consignes (C(j+1)) qui généreront de nouvelles données de réponse afin de réduire la distribution statistique de structures candidates du système biologique ; et

répétition itérative des étapes du procédé en utilisant les consignes les plus récentes (C (j +1)) à chaque itération, pour réduire la distribution statistique de structures candidates du système biologique.

9. Procédé selon la revendication 8, dans lequel ledit algorithme d'apprentissage est un algorithme génétique.

10. Procédé selon la revendication 8, ledit procédé comprenant en outre les étapes de :

(A) identification de la structure dudit système biologique à contrôler par détermination de la relation entre des consignes et une réponse du système biologique pour au moins une fonction dudit système biologique ; et
(B) fourniture d'informations sur la structure du système biologique audit algorithme d'apprentissage (20, 120).

**11.** Procédé selon la revendication 10, comprenant en outre l'étape de :

(C) fourniture audit algorithme d'apprentissage d'informations de retour liées à des extensions de la structure du système biologique obtenues à partir desdits motifs dans lesdites données de réponse du système.

**12.** Procédé selon la revendication 8, comprenant en outre la détermination de structures candidates du système avec un algorithme de cartographie ou d'interpolation non linéaire pour utilisation par l'algorithme d'inversion à recherche globale afin d'identifier la distribution de structures candidates du système les plus cohérentes avec les données de réponse du système.

35

C(0)

20

10

25

33 → LEARNING ALGORITHM

45 ⇒

M(j)

C(j)

BIOLOGICAL SYSTEM
OPERATED BY
ACTIVE CONTROL MEANS

30

# FIG. 1

## FIG. 2

135

120    125

110

LEARNING
ALGORITHM

C(j)                                    S(j)

145

C(0)    SYSTEM                    INVERSION          N(0)
                                  ALGORITHM
                                                     N(j*)

130

                                            M(j)    150

MEASURING
MEANS

140

110                                    10

N(0)    IDENTIFICATION    N(j*)    CONTROL        C(j*)
        APPARATUS                  APPARATUS

## FIG. 3

# FIG. 4

```
                    50
              Operate System                    Determine New        67
  C(0) ───▶     Through      ◀─────────────      Control Settings
              Control Settings
                    │                                   ▲
                    │                                   │
                    ▼                                   │
              Collect                          Identify Patterns
            System Response                          In              65
                Data                          System Response
   60                                             Data
                    │                                   ▲
                    │                                   │
                    ▼                                   │
               Response                             ┌─────────┐
              Closer To       ──────────────────▶   │   No    │
           Desired Behavior?                        └─────────┘
   70               │
                    │
                    ▼
              ┌─────────┐
              │   Yes   │  ─────▶   C(j*)              75
              └─────────┘
```

# FIG. 5

*150*

```
         Operate System                    Determine New      167
C(0) →      Through        ←──────────────  Control Settings
          Control Settings
                │                                    ↑
                ↓                                    │
         Collect                                     │
         System Response                             │
         Data                                        │
    160                                              │
                │                                     │
                ↓                                     │
         Invert                                       │
         System Response                              │
         Data                               Analyze        165
    162                                     Distribution
                │                                    ↑
                ↓                                    │
         Determine Distribution                      │
              of                                     │
         Inverted System Structures                  │
    163                                              │
                │                                     │
                ↓                                     │
         Was Distribution  ──────→  Yes  ────────────┘
           Reduced?
    170
                │
                ↓
              No  ──────→  N(j*)        175
```

## REFERENCES CITED IN THE DESCRIPTION

**Patent documents cited in the description**

- US 5441532 A
- US 5455891 A
- US 0100150 A
- WO 0150124 A1

**Non-patent literature cited in the description**

- **LINSE et al.** *J. Guidance. Contrl. Dyn,* 1993, vol. 16 (6
- **J. SEINFELD.** *Chem. Erig.Sci,* 1969, vol. 24, 75-83
- **R. SNIEDER et al.** *Inv. Prob,* 1998, vol. 14, 387-404
- **A. FRADKOV.** *Physica D,* 1999, vol. 128, 159-168
- **BANKS et al.** *SIAM J. Contrl. Optim,* 1990, vol. 28 (3), 552-569
- **BAUMEISTER et al.** *SIAM J. Contrl,Optim,* 1997, vol. 35 (2), 678-713